# EUROPEAN PATENT SPECIFICATION

(11) **EP 4 348 746 B1**
(45) Date of publication and mention of the grant of the patent: **11.03.2026**
(21) Application number: 22728288.6
(22) Date of filing: 24.05.2022
(51) Int. Cl.: H01M 10/04, H01M 10/058

(54) **AN APPARATUS AND METHOD FOR ASSEMBLING A BATTERY PACK FOR POWERING ELECTRIC TRACTION MOTORS OF ELECTRIC MOTOR-VEHICLES**
VORRICHTUNG UND VERFAHREN ZUR MONTAGE EINES BATTERIEPACKS ZUR STROMVERSORGUNG VON ELEKTRISCHEN ANTRIEBSMOTOREN VON ELEKTRISCHEN KRAFTFAHRZEUGEN
APPAREIL ET PROCÉDÉ D'ASSEMBLAGE DE BLOC-BATTERIE POUR ALIMENTER DES MOTEURS ÉLECTRIQUES DE TRACTION DE VÉHICULES À MOTEUR ÉLECTRIQUE

(30) Priority: 26.05.2021 IT 202100013649
(43) Date of publication of application: 10.04.2024
(73) Proprietor: Comau S.p.A., 10095 Grugliasco (Torino) (IT)
(72) Inventor: TOMASI, Daniele, 10095 Grugliasco (Torino) (IT); RUFFINO, Daniele, 10095 Grugliasco (Torino) (IT); BERTOLO, Tiziano, 10095 Grugliasco (Torino) (IT)
(74) Representative: Buzzi, Notaro & Antonielli d'Oulx S.p.A.
(86) International application number: PCT/IB2022/054834
(87) International publication number: WO 2022/249049

(56) References cited:
- CN-A- 108 063 277
- CN-A- 109 193 015
- US-A1- 2011 314 665

## Description

### Field of the invention

The present invention refers to apparatuses and methods for assembling a battery pack for powering electric traction motors of an electric or hybrid motor-vehicle.

More particularly, the invention relates to an apparatus of a production plant and a relative method for assembling a battery pack with a multi-level configuration formed by different battery modules side-by-side and superimposed.

### Prior art and object of the invention

In the context of production plants of batteries to power the propulsion of electric vehicles, there is a need to make the assembly operations of different battery modules easy, repeatable and fast. The operations - which can be carried out by operators with the aid of automated systems - must be planned and implemented in such a way as to guarantee execution times compatible with the production rates of the automotive sector. Documents CN 108 063 277 A, US 2011/314665 A1 and CN 109 193 015 A described efferent apparatus in this respect. With reference to the specific application of a battery pack that has a multi-level configuration consisting of several side-by-side and overlapping modules, a consolidated technique involves assembling the levels in succession, starting from a base level, up to the completion of the last level. However, this technique is particularly susceptible to errors, in particular, to the sum of the various errors by extending the chain of tolerances, during execution of the assembly operations of the levels, as it becomes complex to correctly locate in position the different modules that must be mounted side-by-side and overlapping to form the different levels.

The main object of this invention is to satisfy the aforesaid requirements in an optimal way.

Another object of the present invention is to provide an apparatus which can be easily integrated into a production environment.

Another object of the invention is that of producing an apparatus that can be implemented with manual, semi-automatic or fully automatic stations, guaranteeing accessibility from all sides of the battery pack being processed.

Another object of the invention is to provide an apparatus and a method of the type specified above which allows locating in position of the modules to be assembled in a processing station in an extremely precise manner and in an extremely reduced time.

Another object of the invention is to provide an apparatus and a method of the type indicated above, which have high flexibility characteristics, in terms of easy adaptability to a new application and/or changes in the layout of the production plant and/or in the path of the production line.

Yet another object of the invention is to provide an apparatus and a method of the type indicated above, which can be implemented with simple and low-cost means.

### Summary of the invention

The invention is defined in the appended claims. In order to achieve one or more of the aforesaid objects, the invention relates to an apparatus for assembling a battery pack for powering electric traction motors of electric motor-vehicles, wherein said battery pack has a multi-level configuration formed of different side-by-side and overlapping modules,
said apparatus comprising:
- a plurality of processing or assembly stations arranged in succession, and designed to work or assemble the different modules that form the levels of the battery pack,
- a first and a second processing line parallel to each other, each facing a respective side of the stations,
- a first transport device configured for transporting, along said first line through the stations, a first group of components of the battery pack arranged to form a base level of said multi-level configuration,
- a second transport device configured to transport, along said second line through the stations, a second group of components of the battery pack arranged to form successive levels to be overlapped on the base level,
- wherein said first and second transport devices are configured to advance simultaneously along the respective line and station the respective groups of components in a working area of a respective station, in order to enable an intervention on both the groups of components transported by the transport devices, for manufacturing, separately, the different levels,
- a joining station of the levels configured to assemble said second group of components above said first group of components, so as to overlap and assemble together the levels formed in the previous stations.

The invention also relates to the method implemented by means of the apparatus described above.

Further characteristics and advantages of the invention are indicated in the attached dependent claims.

### Detailed description of preferred embodiments

Further characteristics and advantages of the invention will become apparent from the description that follows with reference to the attached drawings, provided purely by way of non-limiting example, wherein:
- Figure 1 is a schematic plan view that illustrates a preferred embodiment of an apparatus according to the present invention,
- Figure 2 is a perspective view illustrating a transport device designed to transport and locate a group of components of a battery pack in position; and
- Figures 3-5 are schematic perspective views that illustrate some detailed characteristics of the apparatus of Figure 1.

**In** the following description various specific details are illustrated aimed at a thorough understanding of examples of one or more embodiments. The embodiments can be implemented without one or more of the specific details, or with other methods, components, materials, etc. **In** other cases, known structures, materials, or operations are not shown or described in detail to avoid obscuring various aspects of the embodiments. The reference to "an embodiment" in the context of this description indicates that a particular configuration, structure or characteristic described in relation to the embodiment is included in at least one embodiment. Therefore, phrases such as "in an embodiment", possibly present in different places of this description do not necessarily refer to the same embodiment. Moreover, particular conformations, structures or characteristics can be combined in a suitable manner in one or more embodiments and/or associated with the embodiments in a different way from that illustrated here, for example, a characteristic here exemplified in relation to a figure may be applied to one or more embodiments exemplified in a different figure.

The references illustrated here are only for convenience and do not, therefore, delimit the field of protection or the scope of the embodiments.

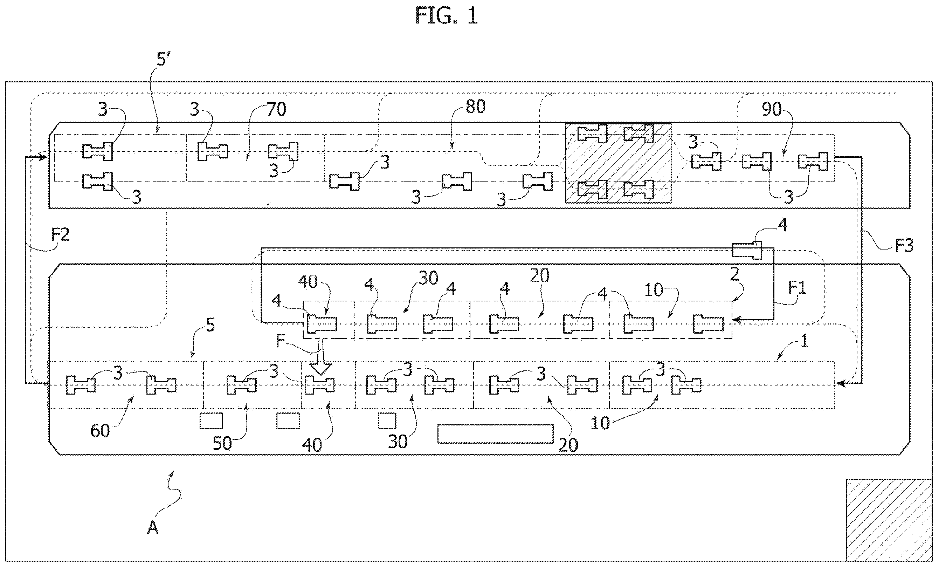

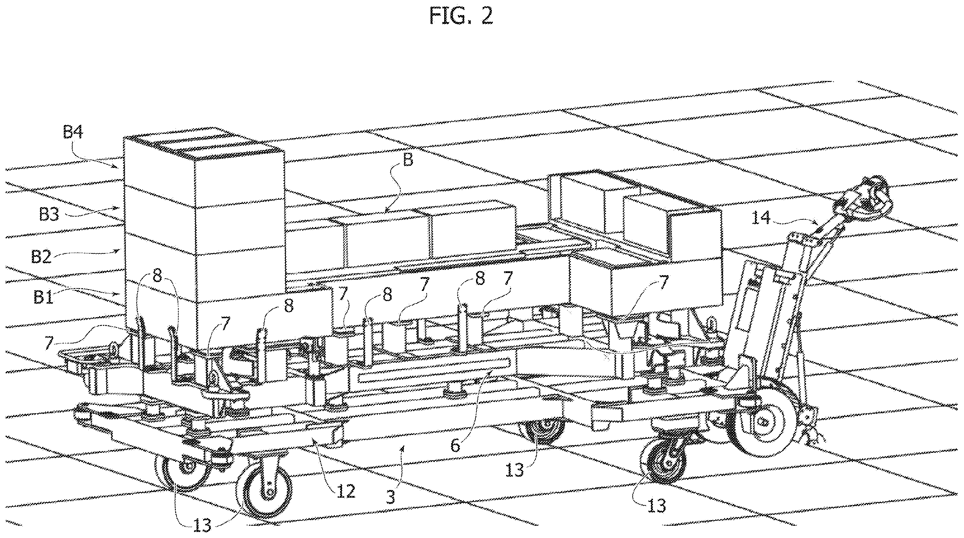

With reference to Figure 1, reference A indicates - in its entirety - an apparatus of a production plant for assembling a battery pack B (illustrated in Figure 2) for powering electric traction motors of electric motor-vehicles, wherein the battery pack B has a multi-level configuration B1, B2, B3, B4 made up of different side-by-side and overlapping modules.

The apparatus A comprises a plurality of processing or assembly stations 10, 20, 30, 40, 50, 60, 70, 80, 90 arranged in succession and designed to perform different operations of processing or assembly or waiting for the different modules that form the levels B1, B2, B3, B4 of the battery pack B according to the specific assembly cycle. The stations 10, 20, 30, 40, 50, 60, 70, 80, 90 may be configured in a fully automatic mode or in an at least partially manual mode.

The apparatus A also comprises a first and a second processing line 1, 2 parallel to each other, each facing a respective side of a first series of stations 10, 20, 30 arranged in succession. The stations 10, 20, 30 are characterized in that they make the components to be processed - which are located in the working area - easily accessible from all sides for the operators who have to intervene in the working area. It should be noted that embodiments with more than two parallel lines, each facing an area of a respective station, fall within the invention.

According to an important characteristic of the invention, the apparatus A comprises a first transport device 3 arranged to transport, along the first line 1 through the stations 10, 20, 30, a first group of components C of the battery pack B arranged to form a base level B1 of the aforesaid multi-level configuration. As explained in detail below, in one or more embodiments, the transport device 3 is a trolley configured to transport a workpiece-holder frame 6, to locate the respective group of components C into position (Figure 2).

According to another characteristic of the invention, the apparatus A comprises a second transport device 4, arranged to transport along the second line 2 through the stations 10, 20, 30, a second group of components C' of the battery pack B, which can form the successive levels B2, B3, B4 to be overlapped on the base level B1 of the battery pack B.

The transport devices 3, 4 are configured to advance the respective groups of components along the respective line 1, 2 and to station the respective groups of components in a working area of a respective station 10, 20, 30. As previously indicated, the stations 10, 20, 30 face both lines 1, 2, so as to allow an intervention on both groups of components transported by the transport devices 3, 4.

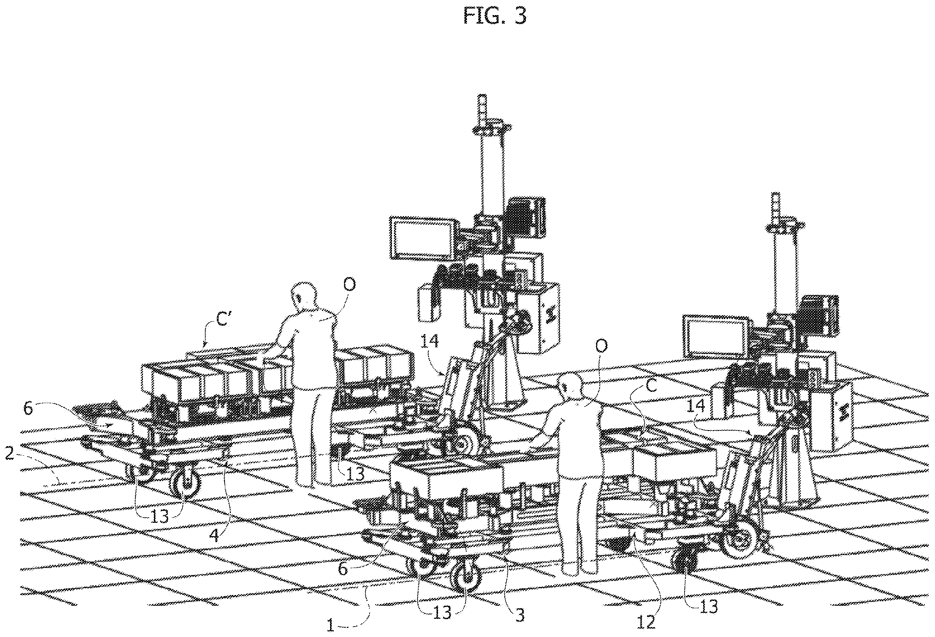

In one or more embodiments, the apparatus A envisages the advancement of the transport devices 1, 2 in parallel, and the stations 10, 20, 30 are configured to allow execution of different operations on both groups of components carried by the respective transport devices 3, 4, simultaneously, in such a way as to optimize production times. Figure 3 illustrates one of the stations 10, 20, 30, wherein two operators O intervene simultaneously on the groups of components C, C' carried by the two transport devices 3, 4. It should be noted that, according to the specific multi-level battery application, the area occupied by the two groups of components C, C' on the respective transport device 3, 4 is substantially the same, since the dimensions of the successive levels B2, B3, B4 are less than those of the base level B1.

In one or more embodiments, as well as in the one illustrated in the drawings, the first and second transport devices 3, 4 are, respectively, a trolley configured to transport a workpiece-holder frame 6, to locate the respective group of components in position. The trolleys may be chosen from a manual traction trolley, a towable trolley with a motorized tractor, a motorized trolley, an AGV or an AMR. Of course, in accordance with that illustrated in Figure 1, in order to optimize production times, the apparatus A may comprise a plurality of trolleys 3, 4 that advance in succession along the respective production line 1, 2, so as to obtain a flow of continuous production.

Alternatively, the apparatus A may comprise traditional-type transport devices such as motorized conveyors or roller conveyors, remaining within the scope of the present invention.

As illustrated in Figure 2, the workpiece-holder frame 6 has a structure consisting of metal elements, for example, welded and/or bolted together, and includes a plurality of upper support surfaces 7 and positioning brackets 8 to support and locate the assembly in a precise position with respect to the workpiece-holder frame 6.

In the illustrated embodiment example, the workpiece-holder frame 6 is transported along the respective line 1, 2 by means of a trolley, with the workpiece-holder frame 2 carried above it. The trolley may be moved along the line 1, 2 in one direction or the other, depending on the needs of each specific application.

In the case of the illustrated example, the trolley is a simple manually-operated trolley including a frame 12 mounted on wheels 13 (in the example shown the front wheels are pivoting and the rear ones have a fixed axis). Again in the case of the illustrated example, the trolley is intended to be moved by means of a small tractor 14 with manual or motor-assisted operation, which is driven by an operator who pulls or pushes it along the lines 1, 2. The operator moves the trolley until it is brought to one of the stations.

One or more of the stations are configured to lift the workpiece-holder frame 6 away from the trolley and to locate it to a precise position both in a vertical direction Z and along two horizontal directions X, Y orthogonal to each other, and with respect to rotations in the horizontal plane. Once the operations (manual and/or automatic) in the working area on the workpiece thus located in position have been carried out, the apparatus of the station lowers the workpiece-holder frame 6, with the workpiece carried above it, above the trolley, after which the operator moves the trolley along the line 1, 2 taking it out of the working area, towards the subsequent stations of the plant.

Of course, the manually-operated trolley that is illustrated in the attached drawings could be replaced by any other type of manually-operated or motorized trolley, and in particular it could be replaced by an AGV (Automated Guided Vehicle) or AMR (Automated Mobile Robot).

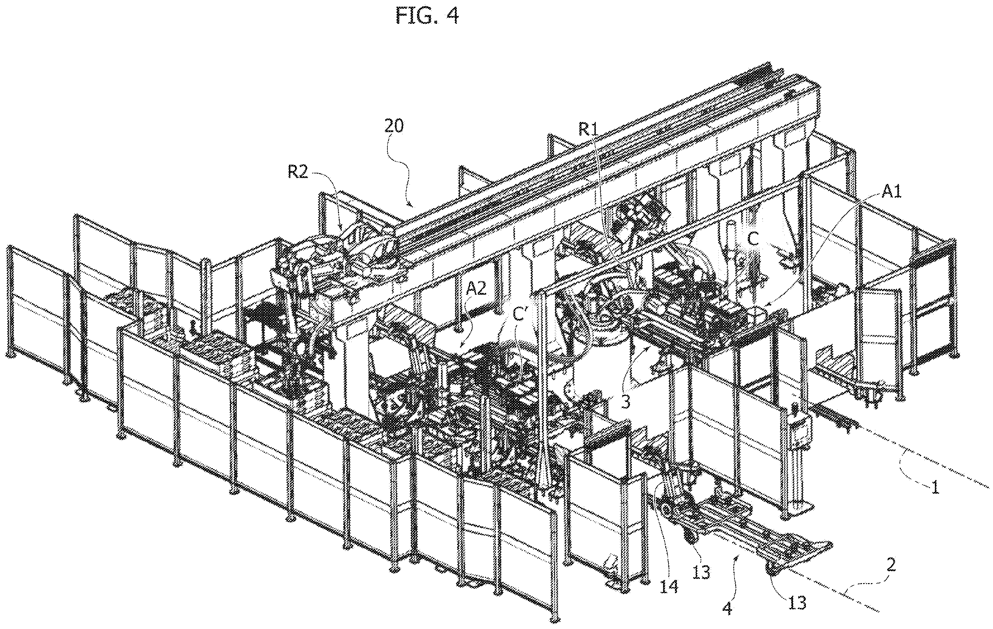

Figure 4 is a schematic perspective view illustrating an embodiment example of one of the assembly stations 10, 20, 30. The assembly station 20 comprises two working areas A1, A2, on which it is possible to operate simultaneously on the groups of components C, C' transported by the transport devices 3, 4, along the respective line 1, 2. The station may comprise an anthropomorphic robot R1 and a Cartesian robot R2 controlled to operate on both groups of components.

According to an important characteristic of the invention, the apparatus A comprises a station 40 for joining the levels of the battery pack B, configured to allow the assembly of the components C' forming the successive levels B2, B3, B4 above the components C forming the base level B1 of the multi-level configuration of the battery pack B.

In one or more embodiments, on the second transport device 4 - along the first series of stations 10, 20, 30 - the assembly of the components C' proceeds to form the successive levels B2, B3, B4, in order to arrive at the joining station 40, with the subsequent levels B2, B3, B4 completed and arranged side-by-side.

In one or more embodiments, the apparatus A is made in such a way as to make the two transport devices 3, 4 converge in a respective working area of the aforesaid joining station 40.

As previously mentioned, the subsequent levels B2, B3, B4 are assembled along the first series of stations 10, 20, 30, and are arranged side-by-side on the second transport device 2, when the transport device 2 is stationed in the joining station 40. In one or more embodiments, as well as in the one illustrated in the drawings, the aforesaid joining station 40 is configured to allow the movement of the components C' forming the successive levels B2, B3, B4 towards the first transport device 3, which carries the base level B1, so as to proceed with the assembly by superimposing the levels B2, B3, B4 in succession above the base level B1 (operation schematically indicated by the arrow F in Figure 1).

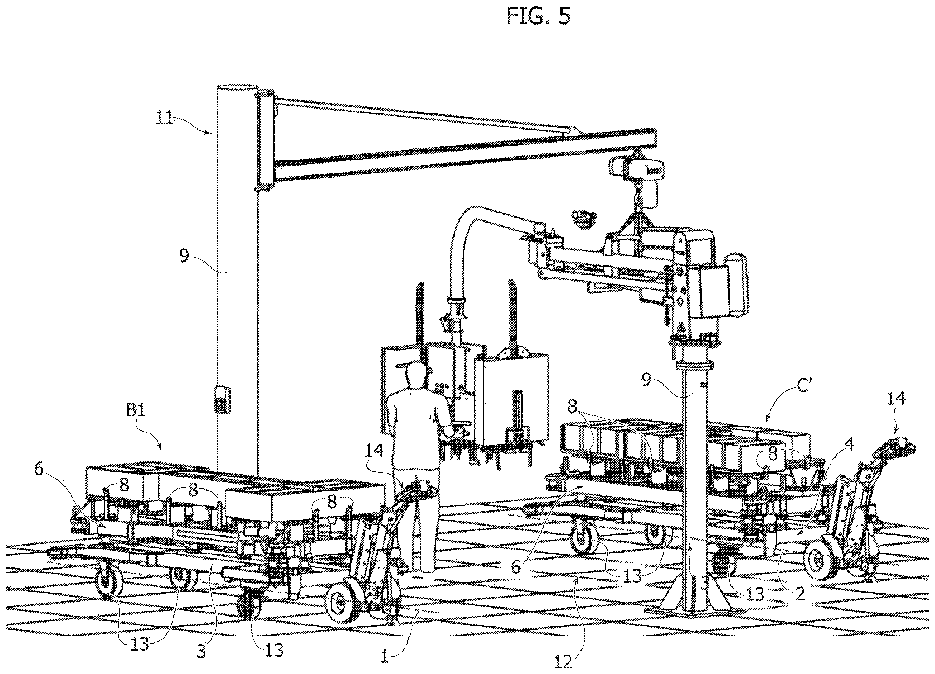

Preferably, the joining station 40 is configured in a partially manual mode. The joining station 40 comprises a manipulator 9 and a hoist 11 designed to facilitate the operations of moving and assembling the subsequent levels B2, B3, B4 above the base level B1 (Figure 5). Of course, the joining station 40 may be made in other ways and with other equipment, as long as they are functional to achieve the intended objects.

As illustrated in Figure 1, in one or more embodiments, the joining station 40 is arranged in succession with respect to the previous stations 10, 20, 30 arranged along the lines 1, 2. Therefore, similarly to the previous stations 10, 20, 30, the joining station 40 has two working areas facing, respectively, one of the two processing lines 1, 2. In this way, it is not necessary to make the transport devices 3, 4 converge towards the joining station 40, as it is located along the lines 1, 2, which the transport devices 3, 4 travel through before being stationed in the joining station. 40.

Thanks to the aforesaid characteristics, assembly of the levels B1, B2, B3, B4 takes place in such a way as to avoid errors due to having to correctly locate the different modules in position, which must be mounted side-by-side and overlapping.

In one or more embodiments, as well as in the one illustrated in Figure 1, the apparatus A comprises additional processing or assembly stations 50, 60, 70, 80, 90 arranged in succession along a third processing line 5. Following joining of the levels B1, B2, B3, B4 at the joining station 40, the first transport device 3, on which all the levels of the battery pack B are located, is configured to continue along the aforesaid third line 5 through the aforesaid additional stations 50, 60, 70, 80, 90, so as to complete the construction of the battery pack B. Preferably, the aforesaid third line 5 comprises a first section, which is the extension of the first line 1 and a second section 5' parallel to the first line 1 (path schematically indicated with F2 in Figure 1).

Following the operations of joining the levels B1, B2, B3, B4 of the battery pack B in the aforesaid joining station 40, the second transport device 4 is configured to return to an initial loading position at the beginning of the second line 4, to start a new path - along the second processing line 2 - for producing an additional battery pack B (path schematically indicated with F1 in Figure 1). Consequently, along the aforesaid path of the third line 5, it is only the first transport device 3 that continues its path along the additional stations 50, 60, 70, 80, 90. Preferably, the additional stations 50, 60, 70, 80, 90 have a single working area, since it is no longer necessary to carry out operations in parallel on two different lines.

Preferably, the aforesaid additional stations 50, 60, 70, 80, 90 are configured to carry out further processing on the battery pack B, such as, for example, completing the electrical and fluid connections, performing sealing operations and completing an acceptance test.

Once the assembly cycle of the battery pack B has been completed, the first transport device 3 is checked to allow discharge of the completed battery pack B, and to make the first transport device 3 converge towards an initial position along the first conveying line 1, in order to start the assembly operations of a new base level B1 of a new battery pack B (path schematically indicated with F3 in Figure 1).

In particular, the invention includes an apparatus such as the one indicated in the attached claim 1, wherein any other known type of transport device is provided instead of a trolley.

## Claims

1. An apparatus (A) for assembling a battery pack (B) for powering electric traction motors of electric motor-vehicles, wherein said battery pack (B) has a multi-level configuration (B1, B2, B3, B4) formed by different modules arranged side-by-side and overlapping each other,
said apparatus (A) comprising:
- a plurality of processing or assembly stations (10, 20, 30, 40) arranged in succession and designed to work or assemble the different modules that form the levels (B1, B2, B3, B4) of the battery pack (B),
- a first and a second processing line (1, 2) parallel to each other, each facing a respective side of the stations (10, 20, 30, 40),
- a first transport device (3) configured for transporting, along said first line (1) through the stations (10, 20, 30, 40), a first group of components (C) of the battery pack (B) arranged to form a base level (B1) of said multi-level configuration,
- a second transport device (4) configured to transport, along said second line (2) through the stations (10, 20, 30, 40), a second group of components (C') of the battery pack (B) arranged to form successive levels (B2, B3, B4) to be overlapped on the base level (B1),
- wherein said first and second transport devices (3, 4) are configured to advance (1, 2) simultaneously along the respective line (1, 2) and station the respective groups of components (C, C') in a working area of a respective station (10, 20, 30, 40), in order to enable an intervention on both the groups of components (C, C') transported by the transport devices (3, 4), for manufacturing, separately, the different levels (B1, B2, B3, B4),
- a joining station (40) of the levels (B1, B2, B3, B4) configured to assemble said second group of components (C') above said first group of components (C), so as to overlap and assemble the levels (B1, B2, B3, B4) formed in the previous stations.

2. An apparatus (A) according to claim 1, wherein said joining station (40) is a manual or automatic station comprising a first and a second working area arranged, respectively, along said first line (1) and said second line (2).

3. An apparatus (A) according to claim 1, wherein said joining station (40) is configured to enable moving of the components (C') forming the successive levels (B2, B3, B4) towards the first transport device (3) which carries the base level (B1), and assembling of the successive levels (B2, B3, B4), sequentially above the base level (B1).

4. An apparatus (A) according to claim 1, wherein said first and second transport devices (3, 4) are any known transport systems.

5. An apparatus (A) according to claim 1, wherein said first and second transport devices (3, 4) are, respectively, a trolley configured to transport a workpiece-holder frame (6), selected from a manual traction trolley, a trolley towable with a motorized tractor, a motorized trolley, an AGV or an AMR.

6. An apparatus (A) according to claim 5, wherein said workpiece-holder frame (6) is configured to support the respective group of components (C, C'), in a predetermined position with respect to the workpiece supporting frame (6).

7. An apparatus (A) according to claim 1, comprising additional processing or assembly stations (50, 60, 70, 80, 90) arranged in succession along a third processing line (5) including a first section, which is the extension of the first line (1) and a second section (5') parallel to the first line (1), wherein the first transport device (3) is configured to advance along said third line (5) through the additional stations (50, 60, 70 , 80, 90), in order to complete the manufacture of the battery pack (B).

8. An apparatus (A) according to claim 7, wherein said additional stations (50, 60, 70, 80, 90) are configured to carry out further operations on the battery pack (B), in particular to complete the electrical and fluid connections and carry out sealing operations and complete an acceptance test.

9. A method for assembling a battery pack (B) for powering electric traction motors of an electric motor-vehicle, wherein said battery pack (B) has a multi-level configuration (B1, B2, B3, B4) formed by different modules arranged side-by-side and overlapping each other, wherein the following is arranged:
- a plurality of processing or assembly stations (10, 20, 30, 40) arranged in succession and designed to work or assemble different modules that form the levels (B1, B2, B3, B4) of the battery pack (B),
- a first and a second processing line (1, 2) parallel to each other, each facing a respective side of the stations (10, 20, 30, 40),
- a first transport device (3) and a second transport device (4) configured for transporting respective components that form the levels of the battery pack (B),
the method comprising the following steps:
- providing a first group of components (C) of the battery pack (B) on the first transport device (3), said group being arranged to form a base level (B1) of said multi-level configuration,
- providing a second group of components (C') of the battery pack (B) on the second transport device (4), said group being arranged to form successive levels (B2, B3, B4) to be overlapped on the base level (B1) of said configuration multiple levels,
- advancing the first and second transport devices (3, 4) along the respective line (1, 2) through the stations (10, 20, 30, 40),
- stationing the first and second transport devices (3, 4) in a respective working area of one of the stations (10, 20, 30, 40),
- at each station (10, 20, 30, 40), working simultaneously on said first and second group of components (C, C') following advancing of the transport devices (3, 4) along the respective line (1, 2) and stationing of the transport devices (3, 4) in a respective station (10, 20, 30, 40),
- providing a joining station (40) of the levels (B1, B2, B3, B4) of the battery pack (B),
- assembling said second group of components (C') above said first group of components (C) carried by the first transport device (3), in order to provide the multi-level configuration of the battery pack (B).

10. A method according to claim 9, wherein, before stationing at the joining station (40), assembly of the components (C') on the second transport device (4) proceeds, in order to separately form the successive levels (B2, B3, B4), so as to arrive at the joining station (40), with the subsequent levels (B2, B3, B4) completed and arranged side-by-side.

11. A method according to claim 10, wherein the joining station (40) is configured to enable moving the components (C') that form the successive levels (B2, B3, B4) towards the first transport device (3), which carries the base level (B1), and assembling of the successive levels (B2, B3, B4), sequentially above the base level (B1).

12. A method according to claim 11, wherein following the operations of joining the levels (B1, B2, B3, B4) at the joining station (40), providing the step of returning the second transport device (4) to a starting loading position at the beginning of the second line (2), to start a new assembly path along the second processing line (2), for manufacturing an additional battery pack (B).

13. A method according to claim 12, comprising:
- providing additional processing or assembly stations (50, 60, 70, 80, 90) arranged in succession along a third processing line (5) including a first section which is the extension of the first line (1),
- advancing the first transport device (3) along said third line (5) through the additional stations (50, 60, 70, 80, 90), so as to complete manufacturing of the battery pack (B).

14. A method according to claim 13, comprising the step of providing additional operations on the battery pack (B) at said further stations (50, 60, 70, 80, 90), in particular, to complete the electrical and fluid connections and carry out sealing operations and complete an acceptance test.

## Patentansprüche

1. Vorrichtung (A) zum Montieren eines Batteriepakets (B) zum Antreiben elektrischer Traktionsmotoren von Elektrofahrzeugen, wobei das Batteriepaket (B) eine mehrstöckige Konfiguration (B1, B2, B3, B4) aufweist, die aus verschiedenen Modulen besteht, die nebeneinander angeordnet und übereinander gestapelt sind,
wobei die Vorrichtung (A) umfasst:
- eine Mehrzahl von Bearbeitungs- oder Montagestationen (10, 20, 30, 40), die hintereinander angeordnet sind und dazu ausgelegt sind, die verschiedenen Module zu bearbeiten oder zu montieren, welche die Ebenen (B1, B2, B3, B4) des Batteriepakets (B) bilden,
- eine erste und eine zweite Bearbeitungslinie (1, 2), die parallel zueinander verlaufen und jeweils einer Seite der Stationen (10, 20, 30, 40) zugewandt sind,
- eine erste Transporteinrichtung (3), die dazu ausgelegt ist, entlang der ersten Linie (1) durch die Stationen (10, 20, 30, 40) eine erste Gruppe von Komponenten (C) des Batteriepakets (B) zu transportieren, welche so angeordnet sind, dass sie eine Basisebene (B1) der mehrstöckigen Konfiguration bilden,
- eine zweite Transporteinrichtung (4), die dazu ausgelegt ist, entlang der zweiten Linie (2) durch die Stationen (10, 20, 30, 40) eine zweite Gruppe von Komponenten (C') des Batteriepakets (B) zu transportieren, welche so angeordnet sind, dass sie auf der Basisebene (B1) aufeinanderfolgende Ebenen (B2, B3, B4) bilden,
- wobei die erste und die zweite Transporteinrichtung (3, 4) dazu ausgelegt sind, sich gleichzeitig entlang der jeweiligen Linie (1, 2) vorwärts zu bewegen und die jeweiligen Komponentengruppen (C, C') in einem Arbeitsbereich einer jeweiligen Station (10, 20, 30, 40) zu positionieren, um ein Eingreifen an beiden von den Transporteinrichtungen (3, 4) transportierten Komponentengruppen (C, C') zu ermöglichen, sodass die verschiedenen Ebenen (B1, B2, B3, B4) getrennt voneinander hergestellt werden,
- eine Verbindungsstation (40) für die Ebenen (B1, B2, B3, B4), die dazu ausgelegt ist, die zweite Komponentengruppe (C') oberhalb der ersten Komponentengruppe (C) zu montieren, um die in den vorhergehenden Stationen gebildeten Ebenen (B1, B2, B3, B4) übereinander anzuordnen und zu verbinden.

2. Vorrichtung (A) nach Anspruch 1, wobei die Verbindungsstation (40) eine manuelle oder automatische Station ist, die einen ersten und einen zweiten Arbeitsbereich aufweist, welche jeweils entlang der ersten Linie (1) bzw. der zweiten Linie (2) angeordnet sind.

3. Vorrichtung (A) nach Anspruch 1, wobei die Verbindungsstation (40) dazu ausgelegt ist, ein Bewegen der Komponenten (C'), welche die aufeinanderfolgenden Ebenen (B2, B3, B4) bilden, in Richtung der ersten Transporteinrichtung (3), die die Basisebene (B1) trägt, sowie das sequentielle Montieren der aufeinanderfolgenden Ebenen (B2, B3, B4) oberhalb der Basisebene (B1) zu ermöglichen.

4. Vorrichtung (A) nach Anspruch 1, wobei die erste und die zweite Transporteinrichtung (3, 4) beliebige bekannte Transportsysteme sind.

5. Vorrichtung (A) nach Anspruch 1, wobei die erste und die zweite Transporteinrichtung (3, 4) jeweils einen Wagen darstellen, der dazu ausgelegt ist, einen Werkstückträgerrahmen (6) zu transportieren, wobei der Wagen ausgewählt ist aus einer manuell gezogenen Karre, einem von einem motorisierten Zugfahrzeug gezogenen Wagen, einem motorisierten Wagen, einem AGV oder einem AMR.

6. Vorrichtung (A) nach Anspruch 5, wobei der Werkstückträgerrahmen (6) dazu ausgelegt ist, die jeweilige Komponentengruppe (C, C') in einer vorgegebenen Position relativ zu dem Werkstückträgerrahmen (6) zu halten.

7. Vorrichtung (A) nach Anspruch 1, umfassend zusätzliche Bearbeitungs- oder Montagestationen (50, 60, 70, 80, 90), die hintereinander entlang einer dritten Bearbeitungslinie (5) angeordnet sind, welche einen ersten Abschnitt aufweist, der eine Verlängerung der ersten Linie (1) bildet, sowie einen zweiten Abschnitt (5'), der parallel zur ersten Linie (1) verläuft, wobei die erste Transporteinrichtung (3) dazu ausgelegt ist, entlang der dritten Linie (5) durch die zusätzlichen Stationen (50, 60, 70, 80, 90) voranzubewegen, um die Herstellung des Batteriepakets (B) zu vervollständigen.

8. Vorrichtung (A) nach Anspruch 7, wobei die zusätzlichen Stationen (50, 60, 70, 80, 90) dazu ausgelegt sind, weitere Arbeitsvorgänge an dem Batteriepaket (B) auszuführen, insbesondere zur Vervollständigung der elektrischen und fluidischen Anschlüsse sowie zur Durchführung von Dichtungsarbeiten und eines Abnahmetests.

9. Verfahren zum Montieren eines Batteriepakets (B) zum Antreiben elektrischer Traktionsmotoren eines Elektrofahrzeugs, wobei das Batteriepaket (B) eine mehrstöckige Konfiguration (B1, B2, B3, B4) aufweist, die aus verschiedenen Modulen besteht, die nebeneinander angeordnet und übereinander gestapelt sind, wobei vorgesehen sind:
- eine Mehrzahl von Bearbeitungs- oder Montagestationen (10, 20, 30,40), die hintereinander angeordnet sind und dazu ausgelegt sind, verschiedene Module zu bearbeiten oder zu montieren, welche die Ebenen (B1, B2, B3, B4) des Batteriepakets (B) bilden,
- eine erste und eine zweite Bearbeitungslinie (1, 2), die parallel zueinander verlaufen und jeweils einer Seite der Stationen (10, 20, 30, 40) zugewandt sind,
- eine erste Transporteinrichtung (3) und eine zweite Transporteinrichtung (4), die dazu ausgelegt sind, jeweilige Komponenten zu transportieren, welche die Ebenen des Batteriepakets (B) bilden, wobei das Verfahren folgende Schritte umfasst:
- Bereitstellen einer ersten Gruppe von Komponenten (C) des Batteriepakets (B) auf der ersten Transporteinrichtung (3), wobei diese Gruppe so angeordnet ist, dass sie eine Basisebene (B1) der mehrstöckigen Konfiguration bildet,
- Bereitstellen einer zweiten Gruppe von Komponenten (C') des Batteriepakets (B) auf der zweiten Transporteinrichtung (4), wobei diese Gruppe so angeordnet ist, dass sie auf der Basisebene (B1) der mehrstöckigen Konfiguration aufeinanderfolgende Ebenen (B2, B3, B4) bildet,
- Vorwärtsbewegen der ersten und der zweiten Transporteinrichtung (3, 4) entlang der jeweiligen Linie (1, 2) durch die Stationen (10, 20, 30, 40),
- Positionieren der ersten und der zweiten Transporteinrichtung (3, 4) in einem jeweiligen Arbeitsbereich einer der Stationen (10, 20, 30, 40),
- gleichzeitiges Bearbeiten der ersten und der zweiten Komponentengruppe (C, C') an jeder Station (10, 20, 30, 40) nach dem Vorwärtsbewegen der Transporteinrichtungen (3, 4) entlang der jeweiligen Linie (1, 2) und dem Positionieren in der jeweiligen Station (10, 20, 30, 40),
- Bereitstellen einer Verbindungsstation (40) für die Ebenen (B1, B2, B3, B4) des Batteriepakets (B),
- Montieren der zweiten Komponentengruppe (C') oberhalb der ersten Komponentengruppe (C), die von der ersten Transporteinrichtung (3) getragen wird, um die mehrstöckige Konfiguration des Batteriepakets (B) bereitzustellen.

10. Verfahren nach Anspruch 9, wobei vor dem Positionieren an der Verbindungsstation (40) die Montage der Komponenten (C') auf der zweiten Transporteinrichtung (4) fortschreitet, um die aufeinanderfolgenden Ebenen (B2, B3, B4) getrennt zu bilden, sodass an der Verbindungsstation (40) die nachfolgenden Ebenen (B2, B3, B4) vollständig und nebeneinander angeordnet vorliegen.

11. Verfahren nach Anspruch 10, wobei die Verbindungsstation (40) dazu ausgelegt ist, das Bewegen der Komponenten (C'), welche die aufeinanderfolgenden Ebenen (B2, B3, B4) bilden, in Richtung der ersten Transporteinrichtung (3), welche die Basisebene (B1) trägt, sowie das sequentielle Montieren der aufeinanderfolgenden Ebenen (B2, B3, B4) oberhalb der Basisebene (B1) zu ermöglichen.

12. Verfahren nach Anspruch 11, wobei nach den Verbindungsoperationen der Ebenen (B1, B2, B3, B4) an der Verbindungsstation (40) der Schritt vorgesehen ist, die zweite Transporteinrichtung (4) zu einer Startladeposition am Anfang der zweiten Linie (2) zurückzuführen, um einen neuen Montagepfad entlang der zweiten Bearbeitungslinie (2) zur Herstellung eines weiteren Batteriepakets (B) zu beginnen.

13. Verfahren nach Anspruch 12, umfassend:
- Bereitstellen zusätzlicher Bearbeitungs- oder Montagestationen (50, 60, 70, 80, 90), die hintereinander entlang einer dritten Bearbeitungslinie (5) angeordnet sind, welche einen ersten Abschnitt aufweist, der eine Verlängerung der ersten Linie (1) bildet,
- Vorwärtsbewegen der ersten Transporteinrichtung (3) entlang der dritten Linie (5) durch die zusätzlichen Stationen (50, 60, 70, 80, 90), um die Herstellung des Batteriepakets (B) zu vervollständigen.

14. Verfahren nach Anspruch 13, umfassend den Schritt, an den weiteren Stationen (50, 60, 70, 80, 90) zusätzliche Arbeitsvorgänge an dem Batteriepaket (B) durchzuführen, insbesondere zur Vervollständigung der elektrischen und fluidischen Anschlüsse sowie zur Durchführung von Dichtungsarbeiten und eines Abnahmetests.

## Revendications

1. Dispositif (A) pour l'assemblage d'un pack batterie (B) destiné à alimenter des moteurs de traction électriques de véhicules automobiles électriques, ledit pack batterie (B) présentant une configuration multi-niveaux (B1, B2, B3, B4) formée de différents modules disposés côte à côte et se chevauchant les uns les autres,
ledit dispositif (A) comprenant:
- une pluralité de stations de traitement ou d'assemblage (10, 20, 30, 40) disposées en succession et conçues pour travailler ou assembler les différents modules formant les niveaux (B1, B2, B3, B4) du pack batterie (B),
- une première et une deuxième ligne de traitement (1, 2) parallèles l'une à l'autre, chacune faisant face à un côté respectif des stations (10, 20, 30, 40),
- un premier dispositif de transport (3) configuré pour transporter, le long de ladite première ligne (1) à travers les stations (10, 20, 30, 40), un premier groupe de composants (C) du pack batterie (B) agencés pour former un niveau de base (B1) de ladite configuration multi-niveaux,
- un second dispositif de transport (4) configuré pour transporter, le long de ladite deuxième ligne (2) à travers les stations (10, 20, 30, 40), un second groupe de composants (C') du pack batterie (B) agencés pour former des niveaux successifs (B2, B3, B4) destinés à être superposés au niveau de base (B1),
- dans lequel les premier et second dispositifs de transport (3, 4) sont configurés pour avancer simultanément le long de la ligne respective (1, 2) et positionner les groupes de composants respectifs (C, C') dans une zone de travail d'une station respective (10, 20, 30, 40), afin de permettre une intervention sur les deux groupes de composants (C, C') transportés par les dispositifs de transport (3, 4), en vue de fabriquer séparément les différents niveaux (B1, B2, B3, B4),
- une station d'assemblage (40) des niveaux (B1, B2, B3, B4) configurée pour assembler ledit second groupe de composants (C') au-dessus dudit premier groupe de composants (C), de manière à superposer et assembler les niveaux (B1, B2, B3, B4) formés dans les stations précédentes.

2. Dispositif (A) selon la revendication 1, dans lequel ladite station d'assemblage (40) est une station manuelle ou automatique comprenant une première et une deuxième zone de travail disposées respectivement le long de ladite première ligne (1) et de ladite deuxième ligne (2).

3. Dispositif (A) selon la revendication 1, dans lequel ladite station d'assemblage (40) est configurée pour permettre le déplacement des composants (C') formant les niveaux successifs (B2, B3, B4) vers le premier dispositif de transport (3) portant le niveau de base (B1), et l'assemblage séquentiel des niveaux successifs (B2, B3, B4) au-dessus du niveau de base (B1).

4. Dispositif (A) selon la revendication 1, dans lequel les premier et second dispositifs de transport (3, 4) sont des systèmes de transport quelconques connus.

5. Dispositif (A) selon la revendication 1, dans lequel les premier et second dispositifs de transport (3, 4) sont respectivement des chariots configurés pour transporter un châssis porte-pièce (6), le chariot étant choisi parmi un chariot à traction manuelle, un chariot tracté par un tracteur motorisé, un chariot motorisé, un AGV ou un AMR.

6. Dispositif (A) selon la revendication 5, dans lequel le châssis porte-pièce (6) est configuré pour supporter le groupe de composants respectif (C, C') dans une position prédéterminée par rapport audit châssis porte-pièce (6).

7. Dispositif (A) selon la revendication 1, comprenant des stations supplémentaires de traitement ou d'assemblage (50, 60, 70, 80, 90) disposées en succession le long d'une troisième ligne de traitement (5) comprenant une première section constituant le prolongement de la première ligne (1) et une deuxième section (5') parallèle à la première ligne (1), dans lequel le premier dispositif de transport (3) est configuré pour avancer le long de ladite troisième ligne (5) à travers les stations supplémentaires (50, 60, 70, 80, 90), afin de compléter la fabrication du pack batterie (B).

8. Dispositif (A) selon la revendication 7, dans lequel lesdites stations supplémentaires (50, 60, 70, 80, 90) sont configurées pour effectuer des opérations supplémentaires sur le pack batterie (B), en particulier pour compléter les connexions électriques et fluidiques, effectuer des opérations d'étanchéité et réaliser un essai de réception.

9. Procédé d'assemblage d'un pack batterie (B) destiné à alimenter des moteurs de traction électriques d'un véhicule automobile électrique, ledit pack batterie (B) présentant une configuration multi-niveaux (B1, B2, B3, B4) formée de différents modules disposés côte à côte et se chevauchant les uns les autres, dans lequel sont prévus:
- une pluralité de stations de traitement ou d'assemblage (10, 20, 30, 40) disposées en succession et conçues pour travailler ou assembler différents modules formant les niveaux (B1, B2, B3, B4) du pack batterie (B),
- une première et une deuxième ligne de traitement (1, 2) parallèles l'une à l'autre, chacune faisant face à un côté respectif des stations (10, 20, 30, 40),
- un premier dispositif de transport (3) et un second dispositif de transport (4) configurés pour transporter des composants respectifs formant les niveaux du pack batterie (B),
le procédé comprenant les étapes suivantes:
- fournir un premier groupe de composants (C) du pack batterie (B) sur le premier dispositif de transport (3), ledit groupe étant agencé pour former un niveau de base (B1) de ladite configuration multi-niveaux,
- fournir un second groupe de composants (C') du pack batterie (B) sur le second dispositif de transport (4), ledit groupe étant agencé pour former des niveaux successifs (B2, B3, B4) destinés à être superposés au niveau de base (B1) de ladite configuration multi-niveaux,
- faire avancer les premier et second dispositifs de transport (3, 4) le long des lignes respectives (1, 2) à travers les stations (10, 20, 30, 40),
- positionner les premier et second dispositifs de transport (3, 4) dans une zone de travail respective de l'une des stations (10, 20, 30, 40),
- à chaque station (10, 20, 30, 40), travailler simultanément sur lesdits premier et second groupes de composants (C, C') après l'avancement des dispositifs de transport (3, 4) le long des lignes respectives (1, 2) et leur positionnement dans une station respective (10, 20, 30, 40),
- prévoir une station d'assemblage (40) des niveaux (B1, B2, B3, B4) du pack batterie (B),
- assembler ledit second groupe de composants (C') au-dessus dudit premier groupe de composants (C) porté par le premier dispositif de transport (3), afin de réaliser la configuration multi-niveaux du pack batterie (B).

10. Procédé selon la revendication 9, dans lequel, avant le positionnement à la station d'assemblage (40), l'assemblage des composants (C') sur le second dispositif de transport (4) se poursuit afin de former séparément les niveaux successifs (B2, B3, B4), de sorte qu'à l'arrivée à la station d'assemblage (40), les niveaux successifs (B2, B3, B4) soient achevés et disposés côte à côte.

11. Procédé selon la revendication 10, dans lequel la station d'assemblage (40) est configurée pour permettre le déplacement des composants (C') formant les niveaux successifs (B2, B3, B4) vers le premier dispositif de transport (3) portant le niveau de base (B1), et l'assemblage séquentiel des niveaux successifs (B2, B3, B4) au-dessus du niveau de base (B1).

12. Procédé selon la revendication 11, dans lequel, à la suite des opérations d'assemblage des niveaux (B1, B2, B3, B4) à la station d'assemblage (40), est prévue l'étape consistant à ramener le second dispositif de transport (4) vers une position de chargement initiale au début de la deuxième ligne (2), afin de démarrer un nouveau parcours d'assemblage le long de la deuxième ligne de traitement (2) pour la fabrication d'un autre pack batterie (B).

13. Procédé selon la revendication 12, comprenant:
- la fourniture de stations supplémentaires de traitement ou d'assemblage (50, 60, 70, 80, 90) disposées en succession le long d'une troisième ligne de traitement (5) comprenant une première section constituant le prolongement de la première ligne (1),
- l'avancement du premier dispositif de transport (3) le long de ladite troisième ligne (5) à travers les stations supplémentaires (50, 60, 70, 80, 90), afin de compléter la fabrication du pack batterie (B).

14. Procédé selon la revendication 13, comprenant l'étape consistant à effectuer, dans lesdites stations supplémentaires (50, 60, 70, 80, 90), des opérations supplémentaires sur le pack batterie (B), en particulier pour compléter les connexions électriques et fluidiques, effectuer des opérations d'étanchéité et réaliser un essai de réception.
